# EUROPEAN PATENT APPLICATION

(11) **EP 3 950 878 A1**
(43) Date of publication of application: **09.02.2022**
(21) Application number: 20305909.2
(22) Date of filing: 07.08.2020
(51) Int. Cl.: C09K 8/10, C09K 8/08

(54) **AQUEOUS DRILLING FLUID COMPOSITION COMPRISING XANTHAN GUM AND AN EXFOLIATED 2D MATERIAL**

(71) Applicant: Centre National de la Recherche Scientifique, 75016 Paris (FR); Université de Montpellier, 34090 Montpellier (FR); Ecole Nationale Supérieure de Chimie de Montpellier, 34090 Montpellier (FR)
(72) Inventor: VOIRY, Damien, 34000 MONTPELLIER (FR)
(74) Representative: Novagraaf Technologies

(57) **Abstract**

The present invention belongs to the field of well drilling and to the extraction of a natural resources such as ground water, brine, natural gas, or petroleum, for the injection of a fluid.

The present invention relates to a new aqueous drilling fluid composition comprising xanthan gum and an exfoliated 2D material, its process of manufacture and its use. The invention further relates to drilling process comprising a step of using the aqueous drilling fluid composition of the invention.

## Description

### Technical field

The present invention belongs to the field of well drilling and to the extraction of a natural resources such as ground water, brine, natural gas, or petroleum, for the injection of a fluid.

The present invention relates to a new aqueous drilling fluid composition comprising xanthan gum and an exfoliated 2D material, its process of manufacture and its use. The invention further relates to drilling process comprising a step of using the aqueous drilling fluid composition of the invention.

In the description below, references between **[]** refer to the list of references at the end of the examples.

### Technical background

Drilling fluid or mud formulation and their rheological characterization is a major challenge for oil industry in order to maximize the oil recovery and minimize soil contamination. Drilling fluid serve as many functions: controlling formation pressures, removing cuttings from the wellbore, sealing permeable formations encountered while drilling, cooling and lubricating the bit, transmitting hydraulic energy to downhole tools. Modern wells require fluids with improved rheological properties, as well as thermal resistance, and filtration, among others.

However, drilling fluid compositions vary based on wellbore demands, rig capabilities and environmental concerns. Drilling fluid design and maintenance are also affected by surface and downhole conditions.

In drilling operations, the American Petroleum Institute (API) and the International Association of Drilling Contractors (IADC), classify the drilling fluid systems into three main categories: water-, oil- or gas-phased.

To date, about 90% of the wells drilled use water-based muds and much smaller percentage use oil-based or gas-based **[1-2].** All types of drilling fluids (water, oil or gas-based) have advantages and disadvantages, but they can be easily adapt to different stratigraphic conditions. The final choice will depend on several conditions. For instance, the oil-based drilling fluids offers high temperature resistance, resistance to salt and good lubricity but their formulation is expensive, and often highly harmful for the environment. On the other hand, the formulation of water-based drilling fluids is more environmentally friendly, very competitive economically and it offers the opportunity to readily modulate their physical-chemistry properties. The density, viscosity, and the filtrate losses can be customizable by the additives. The main disadvantages with water-base drilling fluids is related to their lower stability at high temperatures, poor lubrication properties, and high reactivity to the clays present in the well which can lead to time-dependent borehole problems **[1-3].**

Currently, water-based muds are formulated with fresh water as continuous phase with or without added salts, or by using natural or commercial brines for specific purposes. As a matter of fact, a new generation of high-performance water-based synthetic muds are emerging in the last decades, allowing customizable fabrication of muds with specific physical-chemistry properties. In this formulation, it is possible to combine the use of esters, ethers, polyalphaolefins, glycols, glycerines and glucosides providing the advantages of the oil-based formulations but with the handling, biodegradability, disposal features and costs-benefits that water-based muds offers **[1-3].** Some of the most used commercially available muds for industrial applications are: spud muds, bentonite-containing muds, phosphate-containing muds, organic thinned muds (red muds, lignite muds, lignosulfonate muds), and organic colloid muds **[2,4].**

These complex fluids must be improved through additives in order to confer specific buoyancy, rheology and fluid loss control. Its formulation should overcome the poor thermal stability, lubrication and the high reactivity with the clay in the shale, which are considered at present as the major drawbacks in drilling wells **[5-7].** As a representative example, commercial bentonite-based muds require API 13A specifications, with a minimum viscosity of 30 cP at 600 rpm, and the maximum filtration loss up to 15 cm³ for a 6 wt.% aqueous suspension of Bentonite **[8].**

This is why improvements of drilling fluids are particularly appealing. Currently, the drilling fluids enhancements are focused on the following aspects:
- the control of the subsurface pressures,
- the minimization of the damage during well drilling,
- the minimization of the potential for lost circulation,
- the control of the erosion of the borehole,
- the optimization of drilling fluids parameters such as viscosity, buoyancy, stability, and fluid losses, or
- the control of the environmental impact and cost/benefits.

The improvement of drilling fluids may have a strong economic impact on drilling activities as about 15 % of the total costs of the drilling activity is usually invested in the drilling fluid and almost 100 % of the problems that may occur during drilling activities are due to the mud, which is used as drilling fluid.

There is therefore a need for a new, improved, environmentally friendly and cost-efficient new drilling fluid composition that solves the problems listed above.

### Detailed description of the invention

Applicant has developed a new aqueous drilling fluid composition that solves most, if not all, the problems listed above.

The aqueous drilling fluid composition of the invention is based on exfoliated 2D materials, such as vermiculite nanosheets or other exfoliated 2D materials, mixed with xanthan gum in water.

An object of the invention is thus an aqueous drilling fluid composition comprising xanthan gum and an exfoliated 2D material.

In particular, the aqueous drilling fluid composition according to the invention has the following advantages listed below:
- reduced fluid loss compared to standard drilling fluids;
- tunable rheological properties, by adjusting the amount of 2D materials and xanthan gum comparable to those commercially available;
- improved lubrication of the drill bit;
- high chemical stability of the vermiculite nanosheets;
- high environmental compatibility (vermiculite clay is abundantly present in nature and xhantan gum is a natural microbial polysaccharide);
- reduced costs: vermiculite is a very cheap material (only about 100 € /ton) compared to graphite (about 850 to 1000 €/ton) and xhantan gum production prices can be minimized by using natural residues (at present prices range from 1.4 to 1.7 €/kilo);
- low amount of additive materials are necessary;
- the process of manufacture is cheap and readily to implement, thanks to the exfoliation of vermiculite is simple, scalable and environmentally friendly (only water and salts are needed).

It is meant by "xanthan gum", an anionic polysaccharide composed of a β-(1→4)-D-glucopyranose glucan backbone with side chains of (1→3)-α-D-mannopyranose-(2→1)-β-D-glucuronic acid-(4→1)-β-D-mannopyranose on alternating residues. The biological source is the xanthomonas campestris, and the appearance is faint yellow powder. It is a polysaccharide containing glucose, mannose, potassium glucuronate, acetate, pyruvate and forms a hydrophilic colloid with a Brookfield viscosity of 800-1200 cps for a 1 wt.% solution. For example, it can be the compound Product Number: G1253 (Sigma-Aldrich), CAS Number: 11138-66-2 MDL: MFCD00131256.

It is meant by "exfoliated 2D material", ultra-thin (typically atomically-thin) materials with large aspect ratio that are obtained from the deconstruction a lamellar bulk crystals in the form of nanosheets. The exfoliated nanosheets may be comprised between 1 and 3 layers (typically 1 layer). The typical lateral size of the nanosheets may be from 200 nm to 500 nm for transition metal dichalcogenides, MXenes (few-atoms-thick layers of transition metal carbides, nitrides, or carbonitrides), silicates and phosphates, from 100 nm to 1 to 3 µm for boron nitride and from 1 to 10 µm for vermiculite and the graphene oxide (GO). The exfoliated 2D materials according to the invention may have thickness ranging between 0.5 and 15 nm, preferably from 0.5 to 5 nm with an average thickness value of 1.5 nm.

Advantageously, the exfoliated 2D material may be chosen in the group comprising vermiculite, graphene oxide, transition metal dichalcogenides, boron nitride, Mxenes, phosphates and silicates. Preferably, the exfoliated 2D material may be chosen in the group comprising vermiculite, graphene oxide, transition metal dichalcogenides, boron nitride and MXenes. More preferably, the exfoliated 2D material may be vermiculite or graphene oxide.

It is meant by "vermiculite", a lamellar hydrous phyllosilicate mineral, which undergoes significant expansion when heated. Expanded vermiculite is prepared by heating the mineral, and commercial furnaces can routinely produce this effect. Vermiculite forms by the weathering or hydrothermal alteration of biotite or phlogopite. Vermiculite is a 2:1 clay, meaning it has two tetrahedral sheets for every one octahedral sheet. It is a limited-expansion clay with a medium shrink-swell capacity. Vermiculite has a high cation-exchange capacity (CEC) at 100-150 meq/100 g. Vermiculite clays are weathered micas in which the potassium ions between the molecular sheets are replaced by magnesium and iron ions. Its formula is (Mg,Fe²⁺,Fe³⁺)₃[(Al,Si)₄O₁₀](OH)₂·4H₂O (it may be found under CAS Number 1318-00-9).

It is meant by "graphene oxide" (GO), the oxidized form of graphene that may comprise carboxyl, epoxy, and hydroxyl functional groups. GO is commonly prepared by the modified Hummers method. Owing to the presence of carboxyl, epoxy, and hydroxyl functional groups, GO can be water dispersible and hence used in the composition of the invention.

It is meant by "transition metal dichalcogenides", compounds having the formula ME₂, wherein M is a transition metal, preferably Mo, W and E is a chalcogen, preferably S, Se, Te. Preferably, the metal may be chosen in the group comprising Mo and W and the chalcogen may be S.

It is meant by "boron nitride", the compound of chemical formula BN (it may be found under CAS: 10043-11-5).

It is meant by "silicates" and "phosphates", compounds having the formula CaMSi₄O₁₀ and M(PO₄)₂(OH)₄ respectively, wherein M is chosen in the group comprising Cu, Fe, Co, Zr and V, preferably Cu, Fe and Co.

It is meant by "MXenes", the exfoliated form of the MAX phase having the formula: Mₙ₊₁AXₙ, (MAX), wherein n is an integer from 1 to 3, M represents a transition metal, A represents an element, preferably chosen in the group comprising aluminum or silicon, and X represents either carbon or nitrogen.

Advantageously, in the composition of the invention, the weight ratio exfoliated 2D material:xanthan gum may be from 1/3 to 1.5. Preferably, the ratio may be from 0.5 to 1 and more preferably 2/3.

Advantageously, in the composition according to the invention, the weight concentration of xanthan gum may be from 0.05 to 0.6 wt.% (0.5 to 6 g/L). Preferably, the weight concentration of xanthan gum may be from 0.2 to 0.4 wt.% and more preferably 0.3 wt.%, compared to the total weight of the composition.

Advantageously, in the composition according to the invention, the weight concentration of exfoliated 2D material may be from 0.05 to 1.0 wt.% (0.5 to 10 g/L). Preferably, the weight concentration of exfoliated 2D material may be from 0.1 to 0.3 wt.% and more preferably 0.15 wt.%, compared to the total weight of the composition.

Advantageously, in the composition according to the invention, the exfoliated 2D material may be in the form of exfoliated 2D nanosheets obtained from bulk crystal of layered vermiculite.

Advantageously, the composition according to the invention may have a pH from 6 to 9.

Advantageously, the composition according to the invention may further comprise salts. The salts may be chosen in the group comprising sodium chloride, potassium, sodium or cesium formate, calcium chloride, calcium bromide, sodium acetate.

Advantageously, the composition may further comprise organic solvent(s) and/or surfactant(s).

Advantageously, the composition can be tuned to adjust the viscosity, the density, and the stability of the drill fluid solution against aggregation.

The invention also relates to a process of manufacture of an aqueous drilling fluid according to the invention, comprising the steps of:
a) intercalating bulk crystal of layered 2D material, in water, under reflux, in the presence of sodium and/or lithium chloride salts,
b) filtration of the intercalated minerals obtained in step a),
c) exfoliation of the intercalated minerals by stirring in water, the concentration of the intercalated minerals being preferably from 0.1-2 wt.%,
d) separation of the exfoliated minerals obtained in step c), preferably by centrifugation,
e) liquid-liquid mixing of an aqueous solution comprising the exfoliated minerals obtained in d) and an aqueous solution comprising xanthan gum, the final ratio exfoliated 2D material:xanthan being preferably from 1/3 to 1.5, more preferably from 0.5 to 1.

Advantageously, in the process according to the invention, steps a) and b) may be repeated on the intercalated minerals obtained in step b). The process may thus further comprise a step a') of intercalating the intercalated minerals obtained in step b), in water, under reflux, in the presence of sodium and/or lithium chloride salts, followed by a step b') of filtration of the intercalated minerals obtained in step a'), before pursuing with step c).

The invention further relates to the use of xanthan gum and an exfoliated 2D material in the manufacture of an aqueous drilling fluid composition. The invention thus also relates to a method of producing an aqueous drilling fluid composition comprising a step of admixing xanthan gum and exfoliated 2D material.

Another object of the invention is a use of the aqueous drilling fluid composition according to the invention for decreasing the fluid loss across the wellbore, cooling and lubricating the bit during drilling and/or removing materials from the wellbore during drilling.

The invention further relates to a drilling process comprising a step of decreasing the fluid loss across the wellbore, cooling and lubricating the bit during drilling, and/or removing materials from the wellbore during drilling by means of the aqueous drilling fluid composition according to the invention.

### Brief description of the figures

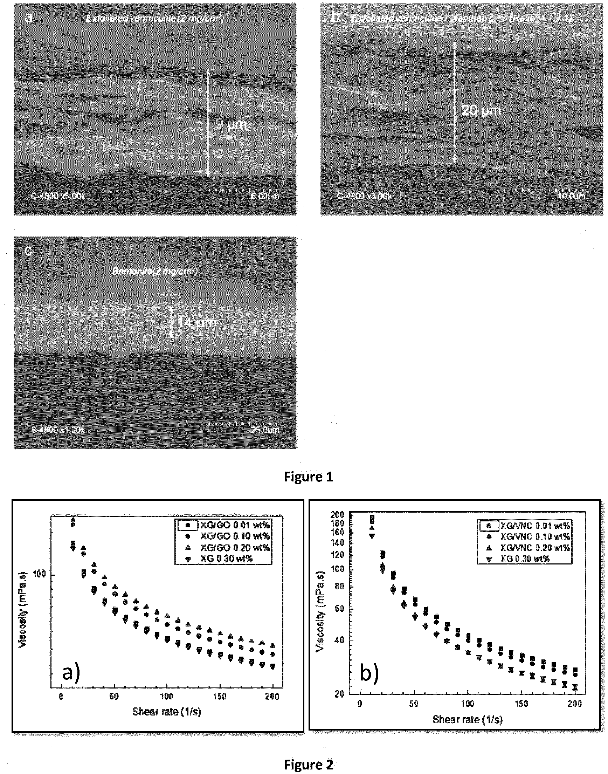

Figure 1 represents the scanning electron microscope image of membranes prepared by filtration under a constant pressure of 4 bars. The membranes correspond to (a) pure exfoliated vermiculite nanosheets with a surface concentration of 2 mg/cm² and (b) vermiculite nanosheets (NS):XG mixture with a weight ratio of 1.4:2.1 (in mg/mL) and a surface concentration in vermiculite of 2 mg/cm² and (c) bentonite (surface concentration of 2 mg/cm²).
Figure 2 represents the viscosity in mPa·s or cP versus shear rate in the range of 0-200 s⁻¹ for: a) XG/GO and b) XG/NS formulations for various contents of Graphene Oxide (GO) from 0.01 to 0.2 wt % and vermiculite nanosheets (NS) from 0.01 to 0.2 wt % respectively. Xanthan Gum content was constant at 0.3 wt.%.

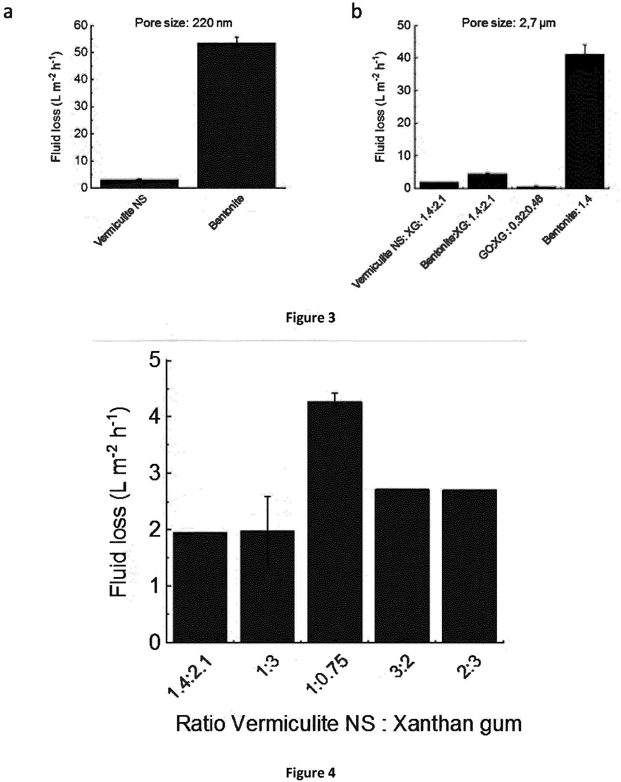

Figure 3 represents the fluid loss measured on supports with 220 nm (a) and 2.7 µm (b) pore sizes for exfoliated vermiculite (2D clay), drill fluid: bentonite (used as reference) and vermiculite nanosheets (NS):XG mixture with different weight ratios (expressed in mg/mL). The surface concentration of bentonite, vermiculite and GO is kept constant at 2 mg/cm² for all the tests.
Figure 4 represents the influence of the vermiculite nanosheets:xanthan gum weight ratio on the fluid loss performance. The fluid losses are measured using a 2.7 µm-pore size support.

### EXAMPLES

### Example 1: Preparation of drilling fluid (vermiculite nanosheets /xanthan gum)

The vermiculite nanosheets (NS) are exfoliated after intercalation with alkaline ions (Na and Li). The bulk expanded minerals are dispersed at a concentration of 0.25 wt.% with saturated NaCl aqueous solution under reflux (typically at a temperature of 105°) for 24 hours. The solution is then filtered, dispersed at a concentration of 0.25 wt.% in a aqueous solution of LiCI (typically 1 M) and placed under reflux for 24 hours (at a temperature of 105°C). The minerals are then collected by filtration and dispersed in water at a concentration of 0.05-1.0 wt.% (typically 0.5 wt.%). The dispersed minerals are vigorously stirred for 5 hours for the exfoliation to proceed. The stirring time can be shortened to 30 min using ultrasounds. The solution is centrifuged at 3000 rpm for 3 min to remove the non-exfoliated materials in the form of particles. The concentration of the solution can precisely be adjusted by diluting the vermiculite solution with water.

The solutions of xanthan gum (XG) are prepared by dissolving under magnetic stirring during 30 minutes the desired amount of gum in water at room temperature at concentration varying from 0.05-0.6 wt.%.

The drill fluid is prepared by room temperature liquid-liquid mixing. The mixture at the desired content of xanthan gum and vermiculite nanosheets is stirred at room temperature during 30 minutes until a homogeneous suspension is achieved.

Table 1 summarizes the XG:NS ratios for the formulations fabricated in this example.

### Example 2: Preparation of drilling fluid (GO/xanthan gum)

GO is prepared from natural graphite by the modified Hummers' method. Graphite powder (1.5 g) is immerged into cold concentrated H₂SO₄ (50.7 mL) with sodium nitrate (1.14g). KMnO₄ (6 g) is added slowly while stirring for 2 h. After 3 days, 5% H₂SO₄ solution (150mL) is slowly added and the reaction is finally terminated by the addition of 30% H₂O₂ (4.5 mL), after which the color of the solution changed to bright yellow. The mixture is washed with 10% HCI in order to remove metal ions. The solution is then cleaned via dialysis (molecular weight cut-off = 14,000, Sigma-Aldrich) to remove metal ions and acids completely. The GO product is centrifuged at low speed in order to remove smaller flakes and finally at 6000 rpm for 30 min to concentrate the solution.

The mixture at the desired content of Xanthan gum and GO nanosheets is stirred at room temperature during 30 minutes until a homogeneous suspension is achieved.

Table 1 summarizes the XG:GO weight ratios for the formulations fabricated in this example

**Table 1. XG:NS and XG:GO weight ratios for the formulations fabricated.**

| ***(XG:GO) wt.%*** | ***(XG:NS) wt.%*** |
|---|---|
| (0.3/0) | (0.3/0) |
| (0.3/0.01) | (0.3/0.01) |
| (0.3/0.1) | (0.3/0.1) |
| (0.32/0.46) | (0.21/0.14) |
| (0.3/0.2) | (0.3/0.2) |

### Example 3: Performance comparison of drilling fluid according to the invention and a drilling fluid comprising bentonite (counter-example)

We imaged the membrane made of pure vermiculite nanosheets and vermiculite nanosheets:XG mixture with a ratio of 1.4:2.1 (in g/L). The electron microscope image reveals that the vermiculite nanosheets aligned parallel to the porous support during the filtration (Fig. 1 a,b). The thickness of the membrane (filter cake) consisting of pure vermiculite NS is estimated to 9 µm for surface concentration of vermiculite: 2 mg/cm², compared to 20 µm for the vermiculite NS:XG with the ratio 1.4:2.1 (surface concentration of vermiculite: 2 mg/cm²) and 14 µm for a bentonite (surface concentration of bentonite: 2 mg/cm²) (Fig. 1c). Therefore, membranes thickness will depend on the XG, NS and bentonite content. Under similar vermiculite contents, membranes thickness for NS:XG (1.4:2.1) increases up to 220 % if compared with pure vermiculite.

The water-based dispersion of 2D materials has been mixed at different content of xanthan gum (0.01, 0.10, 0.20 and 0.30 wt.%) to produce drilling fluids with tuneable rheological properties (examples are fabricated according to the procedure of example 1 or 2).

A phase diagram of xanthan gum (XG), graphene oxide (GO), GO/XG and NS/XG was established in order to identify the best formulations demonstrating the best stability and similar rheological properties comparable to commercial drilling fluid formulations (Fig. 2). Our results demonstrate that the viscosity can be finely tuned and exhibited a linear region for shear rate larger than 200 s⁻¹.

Besides, a weak but finite yield stress which prevents relaxation is observed in all samples. XG yields stress ranges from 0.04 Pa to 3.5 Pa as XG content increased from 0.05 to 0.6 wt.%. In our formulations, yield stress increased up to 30 % upon addition of 0.1 wt.% of NS (Table 2). In drill fluids formulation, yield stress is directly related with the buoyancy of the nanocomposite, which facilitates the cutting removal when drilling a shale.

**Table 2. Change of yield stress as a function of content of XG and NS/XG in aqueous suspension**

| **Samples (wt.%)** | **Yield Stress (Pa)** |
|---|---|
| XG (0.05) | 0.04 |
| XG (0.15) | 0.05 |
| XG (0.30) | 0.59 |
| XG/NS (0.3/0.01) | 0.72 |
| XG/NS (0.3/0.1) | 0.77 |
| XG/NS (0.3/0.2) | 0.74 |

### Example 4: Fluid loss performances

The drilling fluids 1 (NS:XG 1.4:2.1), 2 (Bentonite:XG 1.4:2.1), 3 (GO:XG 0.32:0.46) and 4 (Bentonite 1.4), have been then tested towards fluid-loss performance using similar conditions as for the API fluid loss test condition. Membranes (filter cake) were fabricated via the filtration of the drilling fluids 1, 2, 3 and 4 under constant pressure of 4 bar using porous supports with a 220 nm and 2.7 µm pore size. The surface concentration of bentonite, vermiculite and GO was kept constant at 2 mg/cm² (20 g/m²) for all the tests (Table 3). The fluid crossing (fluid loss) the film under different pressure has been measured for different type of substrate (the role of the substrate is mimic the natural soil inside the well).

Results show that the drilling fluids 1 and 3 leads to better filtration performance than drilling fluid 2, with a reduced fluid-loss compared to commercial drilling fluid formulation based on bentonite (Fig. 3 a,b).

Drilling fluid 1 was prepared at different ratios of xanthan gum and vermiculite nanosheets and were tested (Fig. 4). Our formulations showed improved performance with a fluid loss if compared to commercial water-based drilling fluids.

As a comparison, the fluid loss for drilling fluid 2 (prepared according to the procedure of drilling fluid 1, in which the couple vermiculite/xanthan gum was replaced by the couple vermiculite/xanthan gum), measured with the same ratio reaches 4.6 L.m⁻².h⁻¹ (which is a 235% increase, Fig. 3b). When compared to drilling fluid 4, with bentonite only, drilling fluid 1 displays a 20-fold lower fluid loss compared (Fig. 3b).

**Table 3. Summary of the different compositions of drill fluid compositions and the associated surface concentration of vermiculite nanosheets, graphene oxide and bentonite in the filter cakes together with the pore size of the support used for the values of fluid loss.**

| **Drill Fluid composition** | **Ratio in 2D mat. / XG** | **Pore size of the support** | **Weight density of 2D materials** | **Fluid loss** |
|---|---|---|---|---|
| Vermiculite | no XG | 220 nm | 2 mg/cm² | 3.2 ± 0.2 |
| Benitonite | no XG | 220 nm | 2 mg/cm² | 53.6 ± 1.9 |
| Graphene oxide | no XG | 220 nm | 2 mg/cm² | 0 |
| Bentonite | no XG | 2.7 µm | 2 mg/cm² | 41.6 ± 3.1 |
| Vermiculite/XG | 1.4/2.1 | 2.7 µm | 2 mg/cm² | 1.95 ± 0.2 |
| Bentonite/XG | 1.4/2.1 | 2.7 µm | 2 mg/cm² | 4.6 ± 0.2 |
| Vermiculite/XG | 1/3 | 2.7 µm | 2 mg/cm² | 1.97 ± 0.6 |
| Vermiculite/XG | 3/2 | 2.7 µm | 2 mg/cm² | 2.72 ± 0.14 |
| Vermiculite/XG | 3/2 | 2.7 µm | 1 mg/cm² | 6.93 ± 1.3 |
| Vermiculite/XG | 2/3 | 2.7 µm | 2 mg/cm² | 2.71 ± 0.3 |
| Graphene Oxide/XG | 0.32/0.46 | 2.7 µm | 2 mg/cm² | 0.59 ± 0.2 |

### List of references

**[1]** Caenn, R., & Chillingar, G. V. (1995). Drilling fluids: State of the art. Journal of Petroleum Science & Engineering, 14, 221-230.
**[2]** Kania, D., Yunus, R., Omar, R., Abdul Rashid, S., & Mohamad Jan, B. (2015). A review of biolubricants in drilling fluids: Recent research, performance, and applications. Journal of Petroleum Science and Engineering, 135, 177-184. https://doi.org/10.1016/j.petrol.2015.09.021
**[3]** Vryzas, Z., & Kelessidis, V. C. (2017). Nano-Based Drilling Fluids: A Review. Energies, 10(4), 540. https://doi.org/10.3390/en10040540
**[4]** Johannes, F. (2015). Drilling muds. En Petroleum Engineer's Guide to Oil Field Chemicals and Fluids (pp. 1-61). Elsevier. https://doi.org/10.1016/B978-0-12-803734-8.00001-1
**[5]** Ismail, Abdul Razak, Rashid, N. M., Jaafar, M. Z., Wan Suliman, W. R., & Buang, N. A. (2014). Effect of Nanomaterial on the Rheology of Drilling Fluids. Journal of Applied Sciences, 14(11), 1192-1197. https://doi.org/10.3923/jas.2014.1192.1197
**[6]** Ismail, A.R., Aftab, A., Ibupoto, Z. H., & Zolkifile, N. (2016). The novel approach for the enhancement of rheological properties of water-based drilling fluids by using multi-walled carbon nanotube, nanosilica and glass beads. Journal of Petroleum Science and Engineering, 139, 264-275. https://doi.org/10.1016/j.petrol.2016.01.036
**[7]** Rafati, R., Smith, S. R., Sharifi Haddad, A., Novara, R., & Hamidi, H. (2018). Effect of nanoparticles on the modifications of drilling fluids properties: A review of recent advances. Journal of Petroleum Science and Engineering, 161, 61-76. https://doi.org/10.1016/j.petrol.2017.11.067.
**[8]** API Spec 13A, Drilling Fluids Materials, Nineteenth Edition, Includes Addendum 1 (2020)

## Claims

1. An aqueous drilling fluid composition comprising xanthan gum and an exfoliated 2D material.

2. The composition according to claim 1, wherein the exfoliated 2D material is chosen in the group comprising vermiculite, graphene oxide, transition metal dichalcogenides, boron nitride, MXenes, phosphates and silicates.

3. The composition according to claim 1 or 2, wherein the weight ratio exfoliated 2D material:xanthan gum is from 1/3 to 1.5, preferably from 0.5 to 1 and more preferably 2/3.

4. The composition according to claim 1 or 2, wherein the weight concentration of xanthan gum is from 0.05 to 0.6 wt.% (0.5 to 6.0 g/L), preferably from 0.2 to 0.4 wt.% and more preferably 0.3 wt.%, compared to the total weight of the composition.

5. The composition according to any of preceding claims, wherein the weight concentration of exfoliated 2D material is from 0.05 to 1.0 wt.% (0.5 to 10 g/L), preferably from 0.1 to 0.3 wt.% and more preferably 0.15 wt.%, compared to the total weight of the composition.

6. The composition according to any of preceding claims, wherein the exfoliated 2D material is in the form of exfoliated 2D nanosheets obtained from bulk crystal, the lateral size of the nanosheets being preferably from 200 nm to 500 nm for transition metal dichalcogenides, MXenes, silicates and phosphates nanosheets, and from 1 to 10 µm for vermiculite and graphene oxide nanosheets.

7. The composition according to any of preceding claims, the pH of which is from 6 to 9.

8. The composition according to any of preceding claims, further comprising salts, the salts being preferably chosen in the group comprising sodium chloride, potassium, sodium or cesium formate, calcium chloride, calcium bromide, sodium acetate.

9. A process of manufacture of an aqueous drilling fluid comprising the steps of:
a) intercalating bulk crystal of layered 2D material, in water, under reflux, in the presence of sodium and/or lithium chloride salts,
b) filtration of the intercalated minerals obtained in step a),
c) exfoliation of the intercalated minerals by stirring in water, the concentration of the intercalated minerals being preferably from 0.1-2 wt.%,
d) separation of the exfoliated minerals obtained in step c), preferably by centrifugation,
e) liquid-liquid mixing of an aqueous solution comprising the exfoliated minerals obtained in d) and an aqueous solution comprising xanthan gum, the final ratio exfoliated 2D material:xanthane being preferably from 1/3 a 1.5, more preferably from 0.5 to 1.

10. The process according to the preceding claim, wherein steps a) and b) are repeated on the intercalated minerals obtained in step b).

11. Use of xanthan gum and exfoliated 2D material in the manufacture of an aqueous drilling fluid composition.

12. Use of the aqueous drilling fluid composition according to any of claims 1 to 9 for decreasing the fluid loss across the wellbore, cooling and lubricating the bit during drilling, and/or removing materials from the wellbore during drilling.

13. Drilling process comprising a step of decreasing the fluid loss across the wellbore, cooling and lubricating the bit during drilling, and/or removing materials from the wellbore during drilling by means of the aqueous drilling fluid composition according to any of claims 1 to 9.
